(19) Europäisches Patentamt / European Patent Office / Office européen des brevets

(11) **EP 3 517 929 B1**

(12) **EUROPÄISCHE PATENTSCHRIFT**

(45) Veröffentlichungstag und Bekanntmachung des Hinweises auf die Patenterteilung:
**13.12.2023 Patentblatt 2023/50**

(21) Anmeldenummer: **19153940.2**

(22) Anmeldetag: **28.01.2019**

(51) Internationale Patentklassifikation (IPC):
**G01N 9/00** [(2006.01)]

(52) Gemeinsame Patentklassifikation (CPC):
**G01N 9/002;** G01N 2009/006

(54) **VERFAHREN ZUR MESSUNG DER DICHTE EINES DURCH EIN ROHR STRÖMENDEN ODER SICH IN EINEM ROHR BEFINDLICHEN MEDIUMS, MESSGERÄT UND DATENTRÄGER**

METHOD FOR MEASURING THE DENSITY OF A MEDIUM FLOWING THROUGH OR RESIDING IN A TUBE, MEASURING DEVICE AND DATA CARRIER

PROCÉDÉ DE MESURE DE LA DENSITÉ D'UN FLUIDE TRAVERSANT UN TUBE OU SE TROUVANT DANS UN TUBE, DISPOSITIF DE MESURE ET SUPPORT DE DONNÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.01.2018 AT 500782018**

(43) Veröffentlichungstag der Anmeldung:
**31.07.2019 Patentblatt 2019/31**

(73) Patentinhaber: **Anton Paar GmbH**
**8054 Graz-Straßgang (AT)**

(72) Erfinder:
- **AMSÜSS, Robert**
  **8073 Feldkirchen bei Graz (AT)**
- **ROSSEGGER, Stefan**
  **8010 Graz (AT)**

(74) Vertreter: **Wildhack & Jellinek Patentanwälte**
**Patentanwälte OG**
**Landstraßer Hauptstraße 50**
**1030 Wien (AT)**

(56) Entgegenhaltungen:
**WO-A1-2006/009548     AT-B1- 516 420**
**DE-A1- 19 823 193     JP-A- 2011 027 521**
**US-A- 5 796 012**

- **Anonymous: "Scherrheometer - Wikipedia", , 17. Juli 2018 (2018-07-17), XP055592128, Gefunden im Internet: URL:https://de.wikipedia.org/wiki/Scherrheometer [gefunden am 2019-05-27]**
- **Anonymous: "Biegeschwinger (Gerät) - Wikipedia", , 14. November 2018 (2018-11-14), XP055592125, Gefunden im Internet: URL:https://de.wikipedia.org/wiki/Biegeschwinger_(Gerät) [gefunden am 2019-05-27]**
- **Anonymous: "Dichte - Wikipedia", , 21. März 2019 (2019-03-21), XP055592127, Gefunden im Internet: URL:https://de.wikipedia.org/wiki/Dichte [gefunden am 2019-05-27]**

EP 3 517 929 B1

**Beschreibung**

Die Erfindung betrifft ein Verfahren gemäß dem Oberbegriff des Patentanspruchs 1. Ferner betrifft die Erfindung ein Messgerät gemäß dem Oberbegriff des Patentanspruch 8 und einen Datenträger gemäß Patentanspruch 9.

Die Erfindung betrifft insbesondere ein Einpunkt-Justierverfahren bzw. Korrekturverfahren zur Dichtebestimmung aus der Periodendauer eines Biegeschwingers.

Im Stand der Technik wird die Dichtemessung mit einem Biegeschwinger mit unterschiedlichen Umsetzungen durchgeführt. Gemeinsam ist diesen Anordnungen, dass das zu untersuchende fluide Medium in ein gebogenes, eingespanntes U-Rohr gefüllt wird,

dass das U-Rohr mittels einer Anordnung zu erzwungenen oder freien Eigenschwingungen angeregt wird,
dass eine Eigenfrequenz und/oder Periodendauer der Schwingung für das untersuchte Medium gemessen wird,
dass die Dichte des zu untersuchenden fluiden Mediums aus der ermittelten Periodendauer einer resonanten Schwingungsmode ermittelt wird.

Eine Anordnung zur Durchführung des Verfahrens umfasst eine Schwingungsanregung (Erregerverstärkung, magnetische oder andere Anregung des Schwingers) und Mittel für die Frequenz- und/oder Amplitudenmessung der Eigenschwingungen über eine Auswerteeinheit, die aus der ermittelten Eigenfrequenz des gefüllten Schwingers die Dichte ermittelt.

Aus dem Stand der Technik, insbesondere aus der DE 198 23 193 A1 (RUHRGAS AG [DE]) vom 11. November 1999, der JP 2011 027521 A (KYOTO ELECTRONICS MFG) vom 10. Februar 2011, der US 5 796 012 A (GOMI SHINGO [JP] ET AL) vom 18. August 1998 und der WO 2006/009548 A1 (MICRO MOTION INC [US]; DUFFILL GRAEME RALPH [US] ET AL.) vom 26. Januar 2006, sind unterschiedliche Messgeräte und Verfahren zur Messung der Dichte einer Probe bekannt. AT 516 420 B1 offenbart ein Verfahren zur Messung der Dichte eines durch ein Rohr strömenden oder sich in einem Rohr befindlichen zu untersuchenden, fluiden Mediums,

- wobei das zu untersuchende fluide Medium in einen Rohrabschnitt eines U-förmig gebogenen Rohrs geleitet wird, dessen Schenkel schwingungsfähig eingespannt sind, wobei eine Eigenfrequenz oder Resonanzfrequenz des Rohrs im Bereich des Rohrabschnitts angeregt und ermittelt wird,
- wobei die Dichte des zu untersuchenden Mediums anhand der ermittelten Eigenfrequenz oder Resonanzfrequenz aus dem vorgegebenen Zusammenhang der Dichte fluider Medien und der Periodendauer P der Eigenfrequenz ermittelt wird, und
- wobei die Dichte mit einer Vorschrift zu einem Zeitpunkt t0 mit einer Vorschrift nach Gl. 1: $p = AP^2 - b$ zur Dichtebestimmung vorab zumindest in einem Zweipunktjustierverfahren unter Ermittlung der Justierkonstanten A, B ermittelt und zur Verfügung gestellt wird, wobei - vor der Durchführung der Messung zu einem Zeitpunkt t1 eine Testmessung vorgenommen wird, bei der
- das Rohr mit einem Referenzmedium mit bekannter Dichte befüllt oder durchströmt wird,
- während sich das Referenzmedium im Rohr befindet oder dieses durchströmt die Eigenfrequenz oder Resonanzfrequenz des eingespannten, befüllten Rohrabschnitts ermittelt wird.

In der Praxis zeigt sich, dass es aufgrund von Veränderungen des Biegeschwingers (Belagsbildung, sich ändernde mechanische Eigenschaften speziell bei Temperaturwechsel etc.) notwendig ist, die Dichtejustierung in regelmäßigen Zeitabständen zu überprüfen (Checkmessungen mit Referenzmedien, vor allem Luft oder Wasser) und im Falle von untragbaren Abweichungen eine neue Dichtejustierung, d.h. Kalibrierung, durchzuführen. Besonders bei Dichtemessgeräten ohne zusätzlichen Referenzschwinger kann diese Vorgangsweise einen bedeutenden zeitlichen Mehraufwand darstellen, da Neujustierungen mitunter täglich durchgeführt werden müssen.

Gemäß der Erfindung soll über eine einzelne Kontrollmessung mit einem Referenzmedium bekannter Dichte (vorzugsweise Luft oder Wasser) bei einer vorgegebenen Temperatur die Drift der Periode bestimmt werden, um in weiterer Folge eine geeignete Korrektur der Periodenwerte und somit der Dichtewerte vornehmen zu können. Somit wird der Mehraufwand einer Neujustierung vermieden und durch eine Einzelmessung (Kontrollmessung) ersetzt. Damit ist es möglich, trotz andauernder Drift der Periodenwerte, die Dichtejustierung über einen längeren, praktikablen Zeitraum aufrecht zu erhalten.

Die Messung der Dichte von fluiden Medien mit einem Biegeschwinger beruht auf der Tatsache, dass die Schwingung eines mit einer zu untersuchenden Probe gefüllten Hohlkörpers von der Füllung des Schwingerrohrs abhängt, d.h. von der Masse bzw. wenn das Volumen konstant ist, von der Dichte des eingefüllten Mediums.

Die Messzelle des Biegeschwingers enthält das schwingfähige, die Probe aufnehmende Gebilde, nämlich einen hohlen, beispielsweise U-förmig gebogenen, gläsernen oder metallischen Rohrkörper. Dieser wird auf elektronischem Weg zu einer Schwingung angeregt. Die beiden Schenkel des U-förmigen Rohrs bilden die Federelemente des Schwingers. Die Eigenfrequenz des U-förmigen Schwingerrohrs wird nur von jenem Teil der Probe beeinflusst, welcher an der Schwingung tatsächlich teilnimmt. Dieses an der Schwingung teilnehmende Volumen V ist durch die ruhenden Schwingungsknoten an den Einspannstellen des Schwinger-Rohrs begrenzt. Ist das Schwingerrohr mindestens bis zu diesen Einspannstellen mit der Probe gefüllt, nimmt immer dasselbe, genau definierte Volumen V an der Schwingung teil und die Masse der Probe kann daher proportional zu ihrer Dichte angenommen werden. Eine Überfüllung des Schwingers über die Einspannstellen hinaus ist für die Messung belanglos. Aus diesem Grund können mit dem Schwinger auch Dichten von Fluiden gemessen werden, die den Schwinger durchströmen. Je nach Ausführungsform sind auch Schwinger mit Gegenmasse bekannt, die senkrecht zur Ebene schwingen, die durch ihre beiden Schenkel gelegt werden kann, oder Schwinger, die doppelt oder einfach gebogen sind und in der Ebene durch die beiden Schenkel schwingen (AT 516421 B1, AT 516420 B1).

Die Dichte des Fluids bestimmt also die spezifischen Frequenzen, in denen das U-förmige Rohr schwingt. Verwendet man Präzisions-Glasrohre oder -Metallrohre, so variieren die Schwingungsparameter je nach Dichte und Viskosität der Flüssigkeit. Die Resonanz-Frequenzen werden durch geeignete Anregung und Abnahme der Schwingungen ausgewertet und aus der Periodendauer wird die Dichte der eingefüllten fluiden Probe bestimmt.

Der Schwinger wird mit Fluiden bekannter Dichte justiert bzw. kalibriert und damit sind die Messungen auswertbar.

Für die Periodendauer P und die Dichte $\rho$ gilt allgemein:

$$\rho = P^2 \frac{R}{4\pi^2 V} - \frac{m}{V} = A\,P^2 - B \quad \text{(Gl. 1),}$$

wobei R der Rohrdurchmesser, V das Probenvolumen, m die Probenmasse und A und B konstante Faktoren sind.

Die Justierung erfolgt mit einer Referenzmessung entsprechend Gl. 1 mit bekannten Standardfluiden, im einfachsten Fall sind dies Wasser und Luft, die zur Justierung herangezogen werden. Die Periodendauern $P_{Luft}$ und $P_{H2O}$ bzw. allgemein $P_1$ und $P_2$ werden gemessen und mit den bekannten Dichtewerten $\rho_{Luft}$ und $\rho_{H2O}$ (bzw. $\rho_1$ und $\rho_2$) werden die Justierkonstanten A und B errechnet und für die Auswertung weiterer Messungen zur Verfügung gestellt.

Um hier gute Ergebnisse zu erzielen, muss einerseits der Schwinger für die Luftmessung extrem sauber und trocken sein, auch die Füllung mit Wasser verlangt einige Zeit.

Es ergeben sich jedoch Probleme in Hinblick auf eine Drift der Messwerte, z.B. bewirkt eine Alterung eine Änderung der Schwingungsperiode. Bekannt ist, dass die Alterung des Schwingers, an sich auch jede andere Veränderung der Messbedingungen, z.B. bei Temperierung, zu Änderungen des Schwingerverhaltens führen kann. Beispielsweise kann bei einer Veränderung der Messtemperatur die Änderung der Verspannungen im Glas zu differierenden Eigenfrequenzen des Schwingers führen. Verspannungen treten auch aufgrund der sich verändernden Anpresskraft beim Einspritzen bei der Befüllung auf.

Damit wird es regelmäßig notwendig, die Justierung des Geräts mit einer Referenzmessung zu überprüfen und gegebenenfalls neu zu justieren. Diese Überprüfung erfolgt beispielsweise je nach gewünschter Genauigkeit der Messergebnisse täglich vor Beginn der Messungen mit einer einzelnen Testmessung mit einem Referenzmedium bekannter Dichte, bevorzugterweise mit Wasser oder Luft, am trockenen Schwinger. Bei Abweichen der ermittelten Dichte des Referenzmediums vom bekannten Standardwert ist allerdings eine Neujustierung des Schwingers mit zwei Referenzmedien - wie zuvor beschrieben - nötig.

Bekannt sind auch Verfahren mit Verwendung eines Referenzschwingers. Dadurch ergibt sich der Vorteil, dass der Referenzschwinger und der Messschwinger bei der Messung an der Probe die gleichen Schwingungseigenschaften aufweisen. Ferner ergibt sich der weitere Vorteil, dass der Referenzschwinger und der Messschwinger gleich altern, wobei angenommen wird, dass die alterungsbedingten Änderungen der Schwingungseigenschaften des Messschwingers und des Referenzschwingers gegenseitig kompensierbar sind.

Voraussetzung dabei ist jedoch, dass die beiden Schwinger möglichst baugleich ausgebildet sind bzw. identes Alterungs- und Temperaturverhalten zeigen. Insbesondere bei Fehlern bzw. Verspannungen die im Füllprozess entstehen, können die Schwinger unterschiedliches Alterungsverhalten zeigen (A 508675 B1).

Demgemäss ist als Aufnehmer für die zu kompensierenden Grössen ein zweiter Schwinger (Referenzschwinger), der mit einer Referenzsubstanz gefüllt wird, vorgesehen. Die Temperatur- und Druckabhängigkeit zweier gleichartig aufgebauter Schwinger kann als gleich vorausgesetzt werden. Wird überdies als Referenzpräparat eine Flüssigkeit oder ein Gas mit gleicher Temperatur- und Druckabhängigkeit der Dichte, wie beim Messpräparat erwartet, eingesetzt und werden beide Schwinger auf gleichem Druck und gleicher Temperatur gehalten, so liefert der Quotient der Perioden beider Schwinger ein druck- und temperaturunabhängiges Signal, welches nur mehr von der variablen Dichte des fluiden Mediums im Messschwinger, und nicht mehr vom Alterungsverhalten des Schwingers abhängt.

Um vor allem für einfach aufgebaute Biegeschwinger ohne Referenzschwinger die Handhabung und Fehlerkorrektur zu vereinfachen wird erfindungsgemäß nunmehr vorgeschlagen, die vor Messbeginn übliche Testmessung für die Korrektur der Periodendauer heranzuziehen, anstelle die Konstanten des Justiermodells A, B neu zu ermitteln, wozu zwei Justiermessungen in einem eigenen Justierprogramm erforderlich wären. Diese Korrektur wird erfindungsgemäß mithilfe der Testmessung direkt vorgenommen.

Erfindungsgemäß wird dabei gemäß den Merkmalen im Kennzeichen des Anspruchs 1 vorgegangen. Ein Messgerät der eingangs genannten Art ist mit den Merkmalen des Patentanspruchs 8 gekennzeichnet.

In weiterer Folge wird zur vereinfachten Darstellung der erfindungsgemäßen Vorgangsweise eine Driftkorrektur bei der Temperatur T=T0 (typischerweise T0=20°C) behandelt, wobei eine Verallgemeinerung auf beliebige Temperaturen in einfacher Weise möglich ist.

Für die Erfindung ist wesentlich einerseits das Vorhandensein einer medienunabhängigen Periodendrift des Biegeschwingers und andererseits eine korrekte Dichtejustierung mit einer vorgegebenen Vorschrift zur Dichtebestimmung bzw. Bestimmung der Justierkonstanten (A, B) zum Zeitpunkt $t_0$:

$$t = t_0: \quad \rho_{Ref} = f(P_{Ref}, T_0) \sim P_{Ref}^2 A - B \quad \text{(Gl. 2)},$$

entsprechend der eingangs genannten Formel für die Dichte $\rho$ (Gl. 1).

Gemäß der Erfindung ist zur Bestimmung der Driftkorrektur eine Test- bzw. Einzelmessung mit einem Referenzmedium bekannter Dichte zu einem Zeitpunkt t=t1 notwendig:

$$t = t_1: \quad \rho'_{Ref} = P_{Ref}'^2 A - B \quad \text{(Gl. 3)}$$

mit

$$P(T) = \sqrt{\frac{\rho + B}{A\left(1 + A_{T1}\Delta T\right)}}$$

Aus obiger Formel ist ersichtlich, dass sich aufgrund der Änderung der Periode zu $P'_{Ref}$ auch die Dichte zu $\rho'_{Ref}$ ändert. Für die Korrektur der Periode ergibt sich aus der Forderung

$$\Delta\rho_{Ref} = \rho'_{Ref} - \rho_{Ref} = 0 \quad \text{(Gl. 4)}$$

eine Korrektur der zum Zeitpunkt t1 gemessenen Periode $P'_{Ref}$ mit der Abweichung

$$\Delta P_{ref} = P_{ref} - P'_{ref}. \quad \text{(Gl. 5)}$$

wobei gilt:

$$P_{ref} = \sqrt{\frac{\rho + B}{A}}$$

Hier wird die Abweichung der zum Zeitpunkt t1 gemessenen Periode $P'_{Ref}$ von der aus dem Dichtereferenzwert

$\rho_{Ref}$ mit den Justierkonstanten A und B errechnete Periodendauer $P_{Ref}$ zum Zeitpunkt t0 bestimmt.

Wird in weiterer Folge zum Zeitpunkt t2 nach der Testmessung ein beliebiges zu untersuchendes fluides Medium unbekannter Dichte gemessen, so ergibt sich gemäß obiger Vorgabe aus der Forderung

$$\Delta\rho_{Med} = \rho'_{Med} - \rho_{Med} = 0 \quad \text{(Gl. 6)}$$

eine Korrektur der gemessenen Periode $P'_{Med}$ mit der Abweichung $\Delta P_{Med}$

$$\Delta P_{Med} = P_{Med} - P'_{Med}.$$

Da jedoch die Periode des untersuchten Mediums $P_{Med}$ zum Zeitpunkt t0 ebenso unbekannt ist, wie seine wahre Dichte, muss diese durch eine Näherung erhalten werden

$$\Delta P_{Med} = P_{Med} - P'_{Med} = cP_{Ref} - c'P'_{Ref} \approx c'(P_{ref} - P'_{ref}) = c' \Delta P_{ref} \quad \text{(Gl. 7)}$$

mit

$$c = \frac{P_{Med}}{P_{Ref}}, c' = \frac{P'_{Med}}{P'_{ref}} \quad \text{(Gl. 8)}$$

Kernpunkt der Erfindung ist die Näherung bzw. Annahme, dass die Abweichung der Periode über den gesamten Messbereich annähernd gleich erfolgt und nicht von weiteren Apparateparametern abhängig ist. (c = c') Es zeigte sich in der Praxis, dass diese Annahme die Genauigkeit der Messungen nicht beeinträchtigt, obwohl bislang angenommen wurde, dass die Dichte immer exakt zu bestimmen ist.

Aus der Abweichung der Periode des Referenzmediums wird die Abweichung der Periode des zu messenden Mediums wie folgt bestimmt bzw. errechnet:

$$\Delta P_{Med} = \frac{P'_{Med}}{P'_{ref}} \Delta P_{ref} \quad \text{(Gl. 9)}$$

Somit kann aus den bestimmten Größen $P_{ref}$ und $P'_{ref}$ sowie der aktuell gemessenen Periode des Mediums $P'_{Med}$ die Driftkorrektur durchgeführt werden.

Luft und Wasser sind als Referenzmedien besonders geeignet, da deren Dichte einfach über Polynome berechnet werden kann. Dies ist insbesondere von Vorteil, wenn das oben skizzierte Verfahren bei Temperaturen ungleich T0 zur Anwendung kommen soll. Dann kann als besonderer Vorteil auch eine temperaturabhängige Referenzperiode besonders einfach Berücksichtigung finden, die zum Zeitpunkt t0 einfach über die Inverse der Dichtefunktion bei der Temperatur T und der Dichte des Referenzmediums bei der Temperatur T = T0 + ΔT erhalten wird:
Es gilt

$$P_{Ref} = f^{-1}(T, \rho_{Ref}) \quad \text{(Gl. 10)}$$

Für Wasser oder Luft als Referenzmedium, deren Dichte lineare Temperaturabhängigkeit zeigt, ergibt sich in einer vorgenommenen, einfachen Korrekturnäherung ein Zusammenhang von Dichte, Schwingungsperiode und Temperatur des fluiden Mediums in Form von

$$\rho(T) = A\,(1 + A_{T1}\Delta T)P^2 - B$$

mit den geräteabhängigen Justierparametern A, B sowie einem Temperaturparameter AT1.

Für die Periodendauer P ergibt sich daraus mit

$$P_{Ref} = f^{-1}(T, \rho_{Ref}) \quad \text{(Gl. 10)}$$

$$P(T) = \sqrt{\frac{\rho + B}{A\,(1 + A_{T1}\Delta T)}} \quad \text{(Gl. 11)}$$

Daraus lässt sich dann analog ein temperaturabhängiger Faktor

$$\kappa(T) = f\left(\frac{\Delta P_{Ref}}{P'_{Ref}}, T\right) \quad \text{(Gl.12)}$$

bzw.

$$\kappa(T) = f\left(\frac{\Delta P_{Ref}\,(T)}{P'_{Ref}\,(T)}\right) \quad \text{(Gl. 13)}$$

für die Korrektur der Referenzperioden bei verschiedenen Temperaturen herleiten.

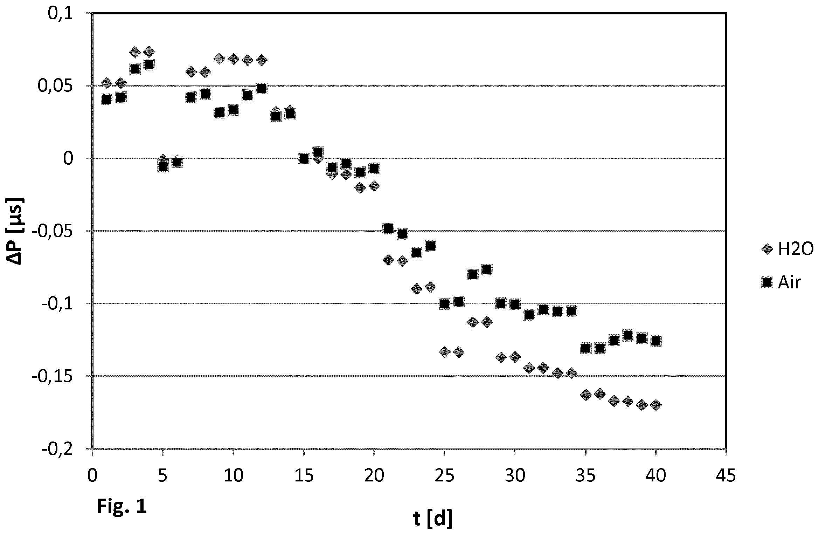

Fig. 1 zeigt die Drift der Periode ΔP eines Biegeschwingers über den Zeitraum eines Monats nach erfolgter Dichtejustierung für die Medien Luft und Wasser über einen Zeitraum von 40 Tagen.

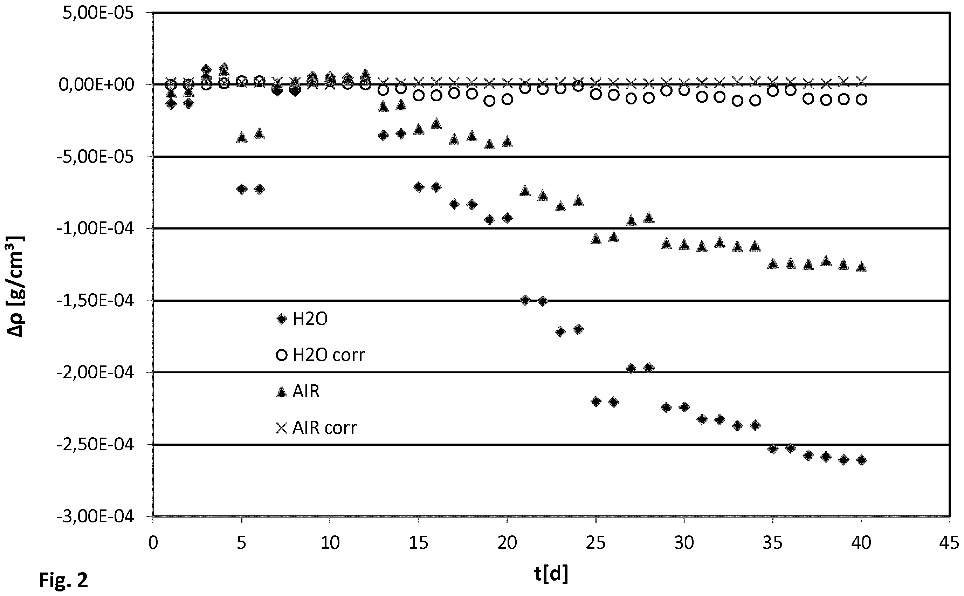

Fig. 2 zeigt den Dichtefehler über denselben Zeitraum einmal unkorrigiert und einmal unter Anwendung der Perioden-Driftkorrektur mit dem Referenzmedium Luft angewandt auf die Medien Luft und Wasser. Es zeigt, dass die erfindungsgemäße Vorgangsweise ohne Neukalibrierung bzw. Justierung mit zwei Medien bei geringem Messaufwand exakte und gut verwertbare Messergebnisse ermöglicht.

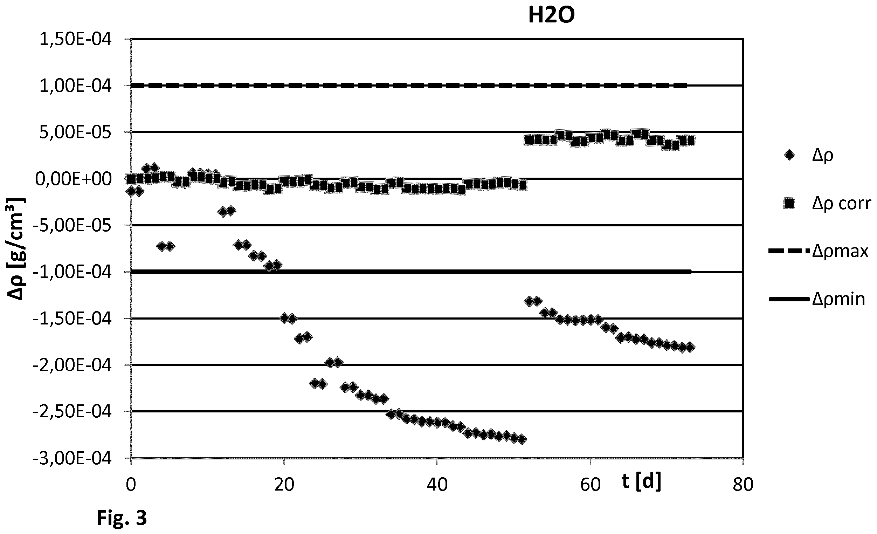

Fig. 3 zeigt die Dichteabweichung für Wasser bei Anwendung des erfindungsgemäßen Verfahrens (Δρcorr) über einen Zeitraum von 80 Tagen im Vergleich zur unkorrigierten Dichte (Δρ), wobei festgestellt wurde, dass die Genauigkeit der Dichtemessung innerhalb einer Fehlergrenze von z.B. 1,0 E-04 sehr gut erreicht werden kann (Grenzwerte Δρmin und Δρmax).

Dichteschwinger bzw. Biegeschwinger, die erfindungsgemäß zum Einsatz kommen können, sind seit langem bekannt und werden in unterschiedlichsten Ausführungsformen hinsichtlich Anregung und Abnahme der Schwingung hergestellt. Es wird dazu auf die Biegeschwinger bzw. deren konstruktiven Aufbau gemäß AT 516421 B1 und AT 516420 B1 verwiesen, bei denen die erfindungsgemäße Vorgangsweise besonders vorteilhaft zum Einsatz gelangen kann. Die unterschiedlichen Mittel zu Anregung und Abnahme der sich ergebenden Eigenschwingungen können z.B. mittels Magnetspulen und Magneten, piezoelektrischen Elementen, kapazitiver Abtastung etc. erfolgen. Dabei sind diese Mittel am Schwinger bevorzugt so anzubringen, dass sie nicht in den Knotenpunkten der untersuchten Eigenschwingung liegen.

Die Periodendauer des Schwingers kann dabei mit unterschiedlichen elektronischen Anordnungen in erzwungener, ungedämpfter oder freier, gedämpfter Art gemessen und für die Auswertung zur Verfügung gestellt werden.

Die dafür benötigen Justierkurven und Justierkonstanten werden nach Justiermessungen an Standards bekannter Dichte und Viskosität in der Steuer- und Auswerteeinheit hinterlegt.

Die Erfindung betrifft auch einen Datenträger, auf dem das erfindungsgemäße Verfahren implementiert ist. Bei Einsatz eines derartigen kompatiblen Datenträgers in die Steuereinheit bzw. Prozessoreinheit von herkömmlichen Messgeräten sind diese in der Lage, das erfindungsgemäße Verfahren vorzunehmen, ohne dass bauliche Änderungen am Messgerät erforderlich sind.

Bemerkt wird, dass der Rohrabschnitt vom zu untersuchenden Medium oder vom Referenzmedium durchströmt werden kann, oder dass dieser Rohrabschnitt auch für jede Messung eigens mit dem jeweiligen Medium befüllt werden kann.

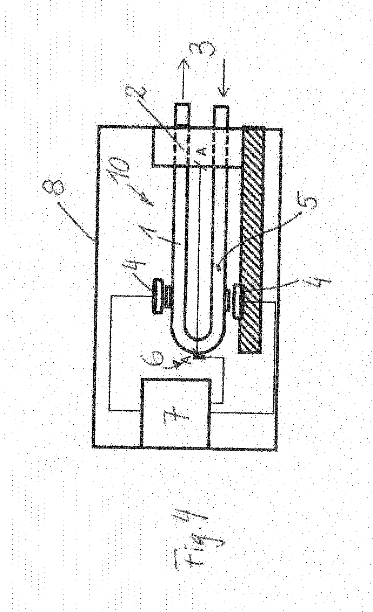

Fig. 4 zeigt den prinzipiellen Aufbau eines erfindungsgemäßen Messgeräts, mit dem das erfindungsgemäße Verfahren durchgeführt werden kann. In einem Messgerätegehäuse 8 befindet sich ein Biegeschwinger 10 mit einem u-förmig abgebogenen Rohrabschnitt 1. Die Schenkel dieses Rohabschnitts 1 sind bei einer Einspannstelle 2 eingespannt. Mit den Pfeilen 3 ist die Zufuhr bzw. eine Durchströmung des Rohrabschnitts 1 mit einem zu untersuchenden Medium angedeutet. Im Bereich des freien Endes des Rohrabschnitts 1 sind Schwingungsgeber 4 angeordnet, die den Rohabschnitt 1 mit einer vorgegebenen Frequenz, insbesondere Eigenfrequenz oder Resonanzfrequenz, schwingen lassen. Mit 6 ist ein Schwingungsabnehmer bezeichnet, mit dem die Frequenz und/oder Periodendauer und/oder Auslenkung des Rohrabschnitts 1 detektierbar ist. Die Schwingungsgeber 4 und der Schwingungsabnehmer 5 sind mit einer Steuer- bzw. Auswerteeinheit 7 verbunden, einerseits um die Schwingung anzuregen, und andererseits um die Messwerte abzunehmen. Mit 5 ist schematisch eine Temperaturmesseinheit bezeichnet, mit der die Temperatur des im Rohrabschnitts 1 befindlichen Mediums feststellbar ist.

**Patentansprüche**

1.  Verfahren zur Messung der Dichte eines durch ein Rohr strömenden oder sich in einem Rohr befindlichen zu untersuchenden, fluiden Mediums,

    - wobei das zu untersuchende fluide Medium in einen Rohrabschnitt eines U-förmig gebogenen Rohrs geleitet wird, dessen Schenkel schwingungsfähig eingespannt sind, wobei eine Eigenfrequenz oder Resonanzfrequenz des Rohrs im Bereich des Rohrabschnitts angeregt und ermittelt wird,
    - wobei die Dichte des zu untersuchenden Mediums anhand der ermittelten Eigenfrequenz oder Resonanzfrequenz aus dem vorgegebenen Zusammenhang der Dichte fluider Medien und der Periodendauer P der Eigenfrequenz ermittelt wird,
    und
    - wobei die Dichte ($\rho_0$) zu einem Zeitpunkt $t_0$ mit einer Vorschrift nach Gl. 1: $\rho = AP^2 - B$ zur Dichtebestimmung vorab zumindest in einem Zweipunktjustierverfahren unter Ermittlung der Justierkonstanten A, B ermittelt und zur Verfügung gestellt wird, wobei
    - vor der Durchführung der Messung zu einem Zeitpunkt $t_1$ eine Testmessung vorgenommen wird, bei der
    - das Rohr mit einem Referenzmedium mit bekannter Dichte befüllt oder durchströmt wird,
    - während sich das Referenzmedium im Rohr befindet oder dieses durchströmt die Eigenfrequenz oder Resonanzfrequenz des eingespannten, befüllten Rohrabschnitts ermittelt wird,
    - die zum Zeitpunkt t0 mit der Vorschrift nach Gl. 1 : Gleichung $\rho = AP^2 - B\_zur$ | Berechnung der Dichte des Referenzmediums ermittelte Dichte ($\rho_{Ref}$) mit der tatsächlichen, in der Testmessung zum Zeitpunkt t1 mit der vorgegebenen Vorschrift gemäß Gl. 3: $\rho' = AP'^2 - B$ ermittelten Dichte ($\rho'_{Ref}$) des Referenzmediums verglichen wird,
    - bei einer Abweichung der ermittelten Dichte ($\rho_{Ref}$) des Referenzmediums von der tatsächlichen Dichte ($\rho_{Ref}$) des Referenzmediums eine korrigierte Periodendauer zur Erzielung eines korrekten Dichtewertes ermittelt und daraus ein Korrekturfaktor (c') gemäß Gl. 8: $c' = P'Med / P'ref$ für die tatsächliche Periodendauer abgeleitet wird,
    - der so ermittelte Korrekturfaktor (c') auf die weiteren für ein beliebiges, zu untersuchendes Medium ermittelten Periodendauern zur Korrektur angewendet wird, und
    - mit diesen korrigierten Periodendauern die Dichte des zu untersuchenden Mediums mit den ursprünglich ermittelten Justierkonstanten A,B ermittelt wird.

2.  Verfahren nach Anspruch 1 **dadurch gekennzeichnet, dass** die Temperatur des Referenzmediums für die Ermittlung des Korrekturfaktors gemäß Gl. 10: $P_{Ref} = f^{-1}(T, \rho_{Ref})$ durch Berücksichtigung der Temperaturabhängigkeit des Referenzmediums Berücksichtigung findet, in dem zum Zeitpunkt t0 eine Dichtejustierung für ein Referenzmedium bekannter Dichte vorgenommen wird, die zumindest für den Temperaturbereich gültig ist, innerhalb dessen die Dichte des zu untersuchenden Mediums ermittelt wird, wobei ein temperaturabhängiger Faktor gemäß Gl. 13:

$$\kappa(T) = f\left(\frac{\Delta P_{Ref}\,(T)}{P'_{Ref}\,(T)}\right)$$

für die Korrektur der Referenzperioden für verschiedene Temperaturen ermittelt wird.

3.  Verfahren nach Anspruch 1 oder 2, **dadurch gekennzeichnet, dass** die Testmessung erneut durchgeführt wird,

    - wenn seit der letzten Testmessung und oder Justierung eine bestimmte Zeitspanne vergangen ist, und/oder

- wenn seit der letzten Justierung eine vorgegebene Anzahl von Messungen durchgeführt worden ist, und/oder
- wenn die Temperatur des untersuchen fluiden Mediums einen vorgegebenen Schwellenwert überschreitet, und/oder
- der Schwinger außergewöhnlichen Belastungen unterzogen wurde.

4. Verfahren nach einem der vorangehenden Ansprüche, dass der Biegeschwinger bei Überschreiten eines Schwellwertes der Abweichung des ermittelten Dichtemesswertes aus der Testmessung vom Referenzwert eine Warnung an den Benutzer ausgibt und/oder eine neue Zweipunktjustierung durchgeführt wird.

5. Verfahren nach einem der vorangehenden Ansprüche, **dadurch gekennzeichnet, dass** die Periodendrift des Biegeschwingers als mediumsunabhängig angenommen bzw. vorausgesetzt wird.

6. Verfahren nach einem der vorangehenden Ansprüche, **dadurch gekennzeichnet, dass** als Korrekturfaktor für die Periode des zu untersuchenden Mediums das Verhältnis c'= P'Med/ P'ref herangezogen wird.

7. Verfahren nach einem der vorangehenden Ansprüche, **dadurch gekennzeichnet, dass** die temperaturabhängige Periodendauer mit gemäß Gl. 11:

$$P(T) = \sqrt{\frac{\rho + B}{A\left(1 + A_{T1}\Delta T\right)}}$$

$$\kappa(T) = f\left(\frac{\Delta P_{Ref}\left(T\right)}{P'_{Ref}\left(T\right)}\right)$$

ermittelt und als Temperaturabhängiger Korrekturfaktor entsprechend Gl. 13:     zur Ermittlung der Dichte herangezogen wird.

8. Messgerät zur Messung der Dichte eines Mediums mit einem einen u-förmig gebogenen Rohrabschnitt (1) aufweisenden Biegeschwinger (10), in welchem Rohrabschnitt das fluide Medium einbringbar ist oder diesen durchströmt, wobei die Schenkel des Rohrabschnitts schwingungsfähig eingespannt sind und wobei eine Eigenfrequenz oder Resonanzfrequenz des Rohrabschnitts (1) mit dort vorgesehenen Schwingungsgebern (4) anregbar und mit dort vorgesehenen Schwingungsabnehmern (6) detektierbar ist, wobei

- das Messgerät eine Steuer- bzw. Auswerteeinheit (7) aufweist, mit der die Dichtewerte des im Rohrabschnitt (1) befindlichen, zu untersuchenden Mediums oder des Referenzmediums und gegebenenfalls die Temperaturen dieser Medien ermittelbar sind, und
- die Steuer- bzw. Auswerteeinheit (7) zur Durchführung eines Verfahrens gemäß einem der Ansprüche 1 bis 7 programmiert ist.

9. Datenträger mit einem Programm, mit dem ein Verfahren nach einem der Ansprüche 1 bis 7 an einem einen Biegeschwinger aufweisenden Messgerät durchführbar ist.

**Claims**

1. Method for measuring the density of a fluid medium to be investigated flowing through a tube or located in a tube,

- wherein the fluid medium to be investigated is conducted into a tube section of a tube bent into a U-shape, the legs of which are clamped so as to be able to vibrate, wherein a natural frequency or resonant frequency of the tube is excited and determined in the region of the tube section,
- wherein the density of the medium to be investigated is determined on the basis of the determined natural frequency or resonant frequency from the predetermined relationship between the density of fluid media and the period duration P of the natural frequency, and
- wherein the density (pO) is determined and made available at a time point $t_0$ by a rule according to equation 1: $\rho=AP^2 - B$ for determining the density in advance at least in a two-point adjustment method by determining the adjustment constants A, B, wherein
- before performing the measurement at a time point $t_1$ a test measurement is carried out, in which
- the tube is filled or flowed through with a reference medium of known density,
- while the reference medium is in the tube or flows through it, the natural frequency or resonant frequency of the clamped, filled tube section is determined,
- the density ($\rho_{Ref}$) determined at time point t0 by the rule according to equation 1 : equation $\rho= AP^2 - B$_for calculating the density of the reference medium is compared with the actual density ($\rho'_{Ref}$) of the reference medium determined in the test measurement at time point t1 by the predetermined rule according to equation 3 $p'= AP'^2 - B$,
- in the event of a deviation of the determined density ($\rho_{Ref}$) of the reference medium from the actual density ($\rho_{Ref}$) of the reference medium a corrected period duration for obtaining a correct density value is determined and a correction factor (c') according to equation 8: $c'= P'Med/ P'ref$ is derived therefrom for the actual period duration,
- the correction factor (c') determined in this way is applied for correction to the further period durations determined for any medium to be investigated, and
- the density of the medium to be investigated is determined by the originally determined adjustment constants A, B using these corrected period durations.

2. Method according to claim 1, **characterised in that** the temperature of the reference medium is taken into account for the determination of the correction factor according to equation 10: $P_{Ref} = f^1(T,\rho_{Ref})$ by taking into account the temperature dependency of the reference medium, in which at time point t0 a density adjustment is carried out for a reference medium of known density, which is valid at least for the temperature range within which the density of the medium to be investigated is determined, wherein a temperature-dependent factor according to equation 13:

$$\kappa(T) = \frac{f\left(\frac{\Delta P_{ref}\,(T)}{P'_{ref}\,(T)}\right)}{} \text{ is determined for the correction of the reference periods for different temperatures.}$$

3. Method according to claim 1 or 2, **characterised in that** the test measurement is carried out again,

    - if a certain period of time has elapsed since the last test measurement and/or adjustment, and/or
    - if a predetermined number of measurements have been performed since the last adjustment, and/or
    - if the temperature of the fluid medium being investigated exceeds a predetermined threshold, and/or
    - the oscillator has been subjected to exceptional loads.

4. Method according to any one of the preceding claims, that the flexural oscillator issues a warning to the user and/or a new two-point adjustment is carried out if a threshold value of the deviation of the determined density measurement value from the test measurement of the reference value is exceeded.

5. Method according to any one of the preceding claims, **characterised in that** the period drift of the flexural oscillator is assumed or exepcted to be independent of the medium.

6. Method according to any one of the preceding claims, **characterised in that** as a correction factor for the period of the medium to be investigated the ratio $c'= P'Med/ P'ref$ is used.

7. Method according to any one of the preceding claims, **characterised in that** the temperature-dependent period duration is determined by equation 11:

$$P(T) = \sqrt{\frac{\rho+B}{A(1+A_{T1}\Delta T)}}$$

and used as the temperature-dependent correction factor according $t_0$ equation 13: $\kappa(T) = f\left(\frac{\Delta P_{ref}\,(T)}{P'_{ref}\,(T)}\right)$ for determining the density.

8. Measuring device for measuring the density of a medium with a bending oscillator (10) having tube section (1) bent into a U-shape, in which tube section the fluid medium can be introduced or flows through it, wherein the legs of the tube section are clamped so as to be capable of oscillation, and wherein a natural frequency or resonant frequency of the tube section (1) can be excited with oscillation devices (4) provided there and can be detected by oscillation pick-ups (6) provided there, wherein

   - the measuring device has a control or evaluation unit (7), by means of which the density values of the medium or reference medium to be investigated located in the tube section (1) and if applicable the temperatures of these media can be determined, and
   - the control or evaluation unit (7) is programmed to carry out a method according to any one of claims 1 to 7.

9. Data carrier with a program, by which a method according to any one of claims 1 to 7 can be carried out on a measuring device comprising a flexural oscillator.

**Revendications**

1. Procédé destiné à la mesure de la densité d'un milieu fluide à étudier s'écoulant à travers un tuyau ou se trouvant dans un tuyau,

   - dans lequel le milieu fluide à étudier est dirigé dans une section de tuyau d'un tuyau coudé en forme de U, dont les branches sont serrées en forme d'ondulation, dans lequel une fréquence propre ou une fréquence de résonance du tuyau est stimulée et déterminée dans la zone de la section de tuyau,
   - dans lequel la densité du milieu à étudier est déterminée à l'aide de la fréquence propre ou de la fréquence de résonance déterminée à partir de la relation prédéfinie de la densité de milieux fluides et de la durée de période P de la fréquence propre, et
   - dans lequel la densité ($\rho$0) est déterminée et mise à disposition à un instant $t_0$ avec une règle conformément à l'équation 1: $\rho=AP^2 - B$ pour la détermination de la densité au préalable au moins dans un procédé d'ajustement en deux points en déterminant les constantes d'ajustement A, B, dans lequel
   - avant la réalisation de la mesure à un instant $t_1$ une mesure de test est effectuée, dans laquelle
   - le tuyau est rempli ou traversé par un milieu de référence ayant une densité connue,
   - pendant que le milieu de référence se trouve dans le tuyau ou traverse celui-ci la fréquence propre ou la fréquence de résonance de la section de tuyau remplie serrée est déterminée,
   - la densité ($\rho_{Ref}$) déterminée à l'instant t0 avec la règle conformément à l'équation 1 : équation p= $AP^2$ - B pour le calcul de la densité du milieu de référence est comparée à la densité réelle ($\rho'_{Ref}$) du milieu de référence réelle déterminée lors de la mesure test à l'instant t1 avec la règle prédéfinie conformément à l'équation 3 : p'= $AP'^2$ - B,
   - lors d'un écart entre la densité déterminée ($\rho_{Ref}$) du milieu de référence et la densité réelle ($\rho_{Ref}$) du milieu de référence une durée de période corrigée pour l'obtention d'une valeur de densité correcte est déterminée et ainsi un facteur de correction (c') conformément à l'équation 8 : c'= P'Med/ P'ref est déduit pour la durée de période réelle,
   - le facteur de correction (c') ainsi déterminé est appliqué pour la correction sur les autres durées de période déterminées pour un milieu quelconque à étudier, et
   - avec ces durées de période corrigées la densité du milieu à étudier est déterminée avec les constantes d'ajustement A, B déterminées initialement.

2. Procédé selon la revendication 1 **caractérisé en ce que** la température du milieu de référence pour la détermination du facteur de correction conformément à l'équation 10 :$P_{Ref}$= $f^{-1}$(T,$\rho_{Ref}$) par le biais de la prise en compte de la dépendance à la température du milieu de référence fait l'objet d'une attention particulière où à l'instant t0 un ajustement de densité est effectué pour un milieu de référence de densité connue, qui est valable au moins pour la plage de température au sein de laquelle la densité du milieu à étudier est déterminée, dans lequel un facteur

$$\kappa(T) = f\left(\frac{\Delta P_{ref}\,(T)}{P'_{ref}\,(T)}\right)$$

dépendant de la température conformément à l'équation 13 : est déterminé pour la correction des périodes de référence pour différentes températures.

3. Procédé selon la revendication 1 ou 2, **caractérisé en ce que** la mesure test est renouvelée,

- lorsqu'un intervalle de temps déterminé s'est écoulé depuis la dernière mesure test et ou le dernier ajustement et/ou
- lorsqu'un nombre prédéfini de mesure a été réalisé depuis le dernier ajustement, et/ou
- lorsque la température du milieu fluide à étudier est supérieure à une valeur seul prédéfinie, et/ou
- l'oscillateur a été soumis à des charges extraordinaires.

**4.** Procédé selon l'une quelconque des revendications précédentes, **caractérisé en ce que** l'oscillateur de flexion lors du dépassement d'une valeur seuil de l'écart de la valeur de mesure de densité déterminée à partir de la mesure test émet un avertissement à destination de l'utilisateur à partir de la valeur de référence et/ou un nouvel ajustement en deux points est réalisé.

**5.** Procédé selon l'une quelconque des revendications précédentes, **caractérisé en ce que** la dérive de période de l'oscillateur de flexion est adoptée ou supposée indépendamment du milieu.

**6.** Procédé selon l'une quelconque des revendications précédentes, **caractérisé en ce que**, en tant que facteur de correction pour la période du milieu à étudier le rapport c'= P'Med/ P'ref est invoqué.

**7.** Procédé selon l'une quelconque des revendications précédentes, **caractérisé en ce que** la durée de période dépendant de la température est déterminée conformément à l'équation 11:

$$P(T) = \sqrt{\frac{\rho+B}{A(1+A_{T1}\Delta T)}}$$

et invoquée en tant que facteur de correction dépendant de la température conformément à l'équation 13:

$$\kappa(T) = f\left(\frac{\Delta P_{ref}\,(T)}{P'_{ref}\,(T)}\right)$$ pour la détermination de la densité.

**8.** Appareil de mesure pour la mesure de la densité d'un milieu avec un oscillateur de flexion (10) présentant une section tubulaire (1) courbée en forme de U, section tubulaire dans laquelle le milieu fluide peut être introduit ou qu'il traverse, dans lequel les branches de la section tubulaire sont serrées en forme d'ondulation et dans lequel une fréquence propre ou une fréquence de résonance de la section tubulaire (1) peut être excitée avec des émetteurs d'oscillations (4) qui y sont prévus et peut être détectée avec des récepteurs d'oscillations (6) qui y sont prévus, dans lequel

- l'appareil de mesure présente une unité de commande ou d'évaluation (7) avec laquelle la valeur de densité du milieu à étudier se trouvant dans la section tubulaire (1) ou du milieu de référence et le cas échéant les températures de ces milieux peuvent être déterminées, et
- l'unité de commande ou d'évaluation (7) est programmée pour la réalisation d'un procédé selon l'une quelconque des revendications 1 à 7.

**9.** Support de données avec un programme avec lequel un procédé selon l'une quelconque des revendications 1 à 7 peut être réalisé au niveau d'un appareil de mesure présentant un oscillateur de flexion.

**Fig. 1**

EP 3 517 929 B1

Fig. 2

Fig. 3

EP 3 517 929 B1

fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19823193 A1
- JP 2011027521 A
- US 5796012 A
- WO 2006009548 A1
- AT 516420 B1
- AT 516421 B1